# EUROPÄISCHE PATENTSCHRIFT

(11) **EP 2 652 404 B1**
(45) Veröffentlichungstag und Bekanntmachung des Hinweises auf die Patenterteilung: **02.08.2017**
(21) Anmeldenummer: 11794731.7
(22) Anmeldetag: 12.12.2011
(51) Int. Cl.: F24C 7/08, F24C 15/00, G06F 3/01, G06F 3/02, G06F 3/041

(54) **BEDIENVORRICHTUNG FÜR EIN HAUSGERÄT MIT EINEM ELEKTRONISCHEN ANZEIGEFELD**
OPERATING DEVICE FOR A HOUSEHOLD APPLIANCE HAVING AN ELECTRONIC DISPLAY PANEL
DISPOSITIF DE COMMANDE POUR APPAREIL MÉNAGER DOTÉ D'UN AFFICHEUR ÉLECTRONIQUE

(30) Priorität: 16.12.2010 DE 102010063186
(43) Veröffentlichungstag der Anmeldung: 23.10.2013
(73) Patentinhaber: BSH Hausgeräte GmbH, 81739 München (DE)
(72) Erfinder: SACHON, Robert, 80469 München (DE); GOSS, Ulrich, 81539 München (DE); KRAEMER, Oliver, 80469 München (DE)
(86) Internationale Anmeldenummer: PCT/EP2011/072412
(87) Internationale Veröffentlichungsnummer: WO 2012/080154

(56) Entgegenhaltungen:
- EP-A1- 0 867 792
- EP-A2- 0 844 325
- EP-A2- 2 211 115
- EP-A2- 2 444 736
- DE-A1-102006 022 326
- DE-A1-102006 026 187
- JP-A- 2010 266 104
- US-A1- 2010 214 213

## Beschreibung

Die Erfindung betrifft eine Bedienvorrichtung für ein Hausgerät, mit einem elektronischen Anzeigefeld und einem Bedienelement, welches zur Einstellung von Betriebsbedingungen des Hausgeräts relativ zum Anzeigefeld bewegbar ist.

Es sind Bedienvorrichtungen für Hausgeräte bekannt, die digitale Anzeigefelder aufweisen, in denen Text und/oder Buchstaben angezeigt werden. Derartige Displays sind üblicherweise als eigenständige Komponenten in einer Bedienvorrichtung vorhanden. Separat und benachbart dazu können Bedienelemente vorgesehen sein, die beispielsweise als Drehwähler oder Drücktasten oder Kippschalter ausgebildet sind. Darüber hinaus sind berührsensitive Bedienfelder bekannt, wie sie beispielsweise durch Touchscreens oder dergleichen realisiert sind.

Aus dem Dokument EP 0 844 325 A2 ist eine Bedienvorrichtung bekannt, bei welcher zur einfachen Einstellung und Anzeige von Grundprogrammen mittels eines einzigen Schalters und eines einzigen Anzeigefelds eine berührungslose Betätigungsübertragung in Form eines magnetoresistiven GMR-Schalters sowie ein Flüssigkristall-Anzeigefeld vorgesehen sind.

Im Dokument EP 0 867 792 A1 wird vorgeschlagen, zwischen einem Schalter und einer von diesem einzustellenden Steuervorrichtung eine geschlossene Schutz-Trennwand vorzusehen. Die Stellübertragung erfolgt unter Nutzung des magnetoresistiven GMR-Effekts berührungslos zwischen der Steuervorrichtung und dem Schalter.

Ein Steuerungsmodul mit einem Display und einem Drehknopf ist des Weiteren aus dem Dokument US 2010/0214213 A1 bekannt.

Das Dokument DE 10 2006 026 187 A1 beschreibt eine Bedieneinrichtung für ein Glaskeramik-Kochfeld, welche zwei Drehelemente aufweist. Diese haben jeweils einen drehbaren Außenbereich nach Art eines Drehrings, der auf einem an der Glaskeramik-Platte abnehmbar befestigbaren Sockelkörper drehbar gelagert ist. An der Oberseite der Drehelemente können Anzeigen, Berührungsschalter oder dergleichen vorgesehen sein. Eine Eingabeeinrichtung ist des Weiteren aus dem Dokument EP 2 211 115 A2 bekannt. Die DE 10 022 326 betrifft ein Bedienelement für ein Haushaltsgerät, welches einen ringförmigen Drehknebel und ein Anzeigeelement aufweist, wobei der Drehknebel unabhängig vom Anzeigeelement drehbar ist, und das Anzeigeelement eine Frontseite aufweist, an welcher Einstellinformationen und/oder Betriebszustände des Haushaltsgeräts anzeigbar sind.

Die JP2010266104 A stellt den nächstliegenden Stand der Technik dar. Die nachveröffentlichte EP 2 444 736 A2 stellt weiteren relevanten Stand der Technik dar.

Es ist Aufgabe der vorliegenden Erfindung, eine Bedienvorrichtung zu schaffen, welche die mechanisch stabile Ausgestaltung und Betätigungsmöglichkeit eines manuell bewegbaren Bedienelements gewährleistet, wobei darüber hinaus die Bedienvorrichtung im Hinblick auf die Flächenausmaße kompakt und minimiert ausgestaltet werden soll und darüber hinaus die Informationspräsentation auf dem elektronischen Anzeigefeld bei Betätigung des Bedienelements leicht wahrnehmbar erfolgen soll.

Diese Aufgabe wird durch eine Bedienvorrichtung, welche die Merkmale nach Anspruch 1 aufweist, und ein Hausgerät, welches die Merkmale nach Anspruch 14 aufweist, gelöst.

Eine erfindungsgemäße Bedienvorrichtung für ein Hausgerät umfasst ein elektronisches Anzeigefeld und ein Bedienelement, welches zur Einstellung von Betriebsbedingungen des Hausgeräts relativ zum Anzeigefeld bewegbar ist. Des Bedienelement ist zumindest bereichsweise innerhalb dem Anzeigefeld angeordnet. Dies bedeutet, dass im Hinblick auf die Ausmaße des elektronischen Anzeigefelds das Bedienelement mit seinen frontseitigen Ausmaßen zumindest bereichsweise hineinragend in die Fläche des Anzeigefelds positioniert ist. Mit einem elektronischen Anzeigefeld wird insbesondere ein Display verstanden, auf dem Informationen dynamisch wechselnd anzeigbar sind. Dies können Informationen umfassend Buchstaben und/oder Zahlen und/oder Symbole sein.

Das Bedienelement ist somit im Hinblick auf seine Anordnung und Flächenpositionierung zumindest bereichsweise eingebettet in der Fläche des Anzeigefelds angeordnet.

Vorzugsweise ist vorgesehen, dass das Bedienelement diesbezüglich vollständig innerhalb der flächigen Ausmaße des Anzeigefelds angeordnet ist.

Mit der zumindest teilweisen Anordnung des Bedienelements innerhalb der Flächenausmaße des Anzeigefelds ist insbesondere auch die Ausführung darunter zu verstehen, bei der die Kontur des Rands des Bedienelements im Bereich, in dem es dem Anzeigefeld zugewandt ist, an die Kontur des Flächenrands des Anzeigefelds formverlaufsmäßig angepasst ist und diese Konturverläufe praktisch direkt aneinander angrenzen.

Das Bedienelement kann auch direkt vor dem Anzeigefeld zumindest bereichsweise angeordnet sein und das Anzeigefeld dann teilweise verdecken.

Durch eine derartige Ausgestaltung kann somit eine sehr kompakte und flächenmäßig minimierte Bedienvorrichtung geschaffen werden. Diesbezüglich war es bisher nicht möglich, elektronische Anzeigefelder mit derartig manuell bewegbaren Bedienelementen zu kombinieren und diese gerade im Hinblick auf die genannte spezifische Anordnung und Positionierung zueinander anzubringen. Neben einer kompakten Ausgestaltung der Bedienvorrichtung kann somit auch in besonders vorteilhafter Weise das Bedienelement relativ zum Anzeigefeld bewegt werden und die dann auf dem Anzeigefeld bewirkten Informationen unmittelbar benachbart zum Bedienelement angezeigt werden. Dadurch sind diese Informationen für einen Nutzer auch intuitiv einfach und sicher wahrnehmbar. Denn betätigt er das Bedienelement ist automatisch seine Blickrichtung auf das Bedienelement gerichtet und aufgrund der positionellen Anordnung zum elektronischen Anzeigefeld auch die in unmittelbarer Nähe zum Bedienelement angezeigten Informationen auf dem Anzeigefeld sofort automatisch wahrnehmbar.

Das Bedienelement ist als Drehwähler ausgebildet. Dies bedeutet, dass die relative Bewegbarkeit des Bedienelements zum Anzeigefeld durch eine Drehbewegung des Bedienelements ausgebildet ist. Diese Spezifikation des Bedienelements kann besonders vorteilhaft mit dem elektronischen Anzeigefeld kombiniert werden. Gerade im Hinblick auf die Betätigungsart und die dann anzuzeigenden Informationen auf dem elektronischen Anzeigefeld um das Bedienelement ermöglicht, dass beim Betätigen des Bedienelements möglichst wenig der Anzeigefläche durch den Nutzer beziehungsweise dessen Hand abgedeckt wird.

Es kann auch vorgesehen sein, dass das Bedienelement ein berührsensitives Bedienelement ist, welches durch Berühren und Entlangstreifen auf dem berührsensitiven Bereich eine Einstellung eines Betriebs des Hausgeräts bewirkt. Derartige Bedienelemente sind jedoch keine, die sich relativ zum Anzeigefeld bewegen lassen.

Vorzugsweise ist vorgesehen, dass an zumindest einem Feldbereich des Anzeigefelds die anzuzeigende Information abhängig von der Bewegung des Bedienelements veränderbar ist. Die Dynamik der Informationspräsentation kann somit durch das Bedienelement selbst verändert werden. Dies ist eine hervorzuhebende Funktionalität.

Vorzugsweise ist vorgesehen, dass eine anzuzeigende Menüoberfläche auf dem Anzeigefeld um das Bedienelement herum anzeigbar ist. Die Menüoberfläche kann übergeordnete Informationsordner umfassen, deren Anwählen durch Drehen des Bedienelements ausgewählt werden können und dann die darin enthaltenen Informationen durch weitere Betätigung des Bedienelements oder anderer Komponenten detaillierter anzeigbar sind. Grundsätzlich kann die Menüoberfläche jedoch auch die damit verbundene Endinformation aufweisen und somit keine Ordnerstruktur darstellen.

Vorzugsweise ist die Menüoberfläche dynamisch veränderbar. Auch dies kann insbesondere durch das Bedienelement bewirkt werden. Die Möglichkeit der Informationspräsentation auf dem Anzeigefeld ist dadurch multipel erweitert und kann aufgrund der Ausgestaltung der Menüoberfläche und der dynamischen Veränderbarkeit sehr nutzerfreundlich und leicht nachvollziehbar gestaltet werden.

Vorzugsweise sind Menüinhalte abhängig von der Stellung, insbesondere der Drehstellung, des Bedienelements aktivierbar.

Vorzugsweise umfasst das Aktivieren eines Menüinhalts ein Aufleuchten, insbesondere in einer anderen Lichtfarbe als nicht aktivierte Menüinhalte, von Menüinhalten. Das Aktivieren kann zusätzlich anstatt dazu jedoch auch eine Änderung der Schriftgröße und/oder eine Änderung der Zahlengröße und/oder eine Änderung der Symbolgröße der angezeigten Informationen umfassen. Auch hier kann somit für einen Nutzer einfach und sehr schnell wahrnehmbar die Auswahl signalisiert werden.

Es ist vorgesehen, dass eine Vorderseite des Bedienelements zumindest bereichsweise als Feldbereich des Anzeigefelds ausgebildet ist. Dadurch kann das in dem Anzeigefeld angeordnete Bedienelement selbst zur Vergrößerung des Anzeigefelds beitragen. Gerade weil das Bedienelement als Drehwähler ausgebildet ist und diese nicht als volle Kreisscheibe sondern nur als Ring ausgebildet ist, kann der von dem Ring umschlossene Flächenbereich zur Anzeige von Informationen verwendet werden. Insbesondere kann dieser Bereich dann auch ein elektronisches Anzeigefeld sein. Erfindungsgemäß ist vorgesehen, dass eine Vorderseite des Bedienelements zumindest bereichsweise als elektronischer Anzeige-Feldbereich ausgebildet ist, auf dem Informationen dargestellt werden können.

Vorzugsweise ist vorgesehen, dass ein von dem Bedienelement umschlossener Flächenbereich ein berührsensitives Bedienfeld aufweist, mit welchem durch Berühren Betriebsbedingungen des Hausgeräts einstellbar sind. Da das Bedienelement ein Ring ist, kann der Kreisbereich im Inneren des Rings als berührsensitives Bedienfeld ausgebildet sein.

Vorzugsweise ist vorgesehen, dass mittels dem Bedienelement oder einem weiteren Bedienteil die Informationstiefe eines auf dem Anzeigefeld anzuzeigenden Menüinhalts einstellbar ist.

So kann vorgesehen sein, dass bei komplexen Bedieninhalten die Anzeigevielfalt durch Trennung in eine auf Tastendruck aufrufbare Funktionsmenüwelt, in der beispielsweise Grundbetriebsarten und Programme des Hausgeräts und dergleichen angezeigt werden können, und eine Optionsmenüwelt, in welcher zusätzliche wählbare Optionen, wie beispielsweise eine Schnellaufheizung bei einem Backofen oder dergleichen, erhöht werden kann.

Es kann auch vorgesehen sein, dass der Nutzer individuell die Menüoberfläche und/oder die Menüinhalte gestaltet, indem er dies mit dem Betätigen des Bedienelements durchführt und insbesondere die nutzerspezifizierte Ausgestaltung dann auch abspeichert. Es kann auch vorgesehen sein, dass dabei individuelle Inhalte zusammengefasst werden oder neu gruppiert werden.

Vorzugsweise ist vorgesehen, dass separat zum Bedienelement zumindest ein Bedienteil vorgesehen ist, welches das Ein- und Ausschalten des Hausgeräts ermöglicht. Es kann vorgesehen sein, dass dieses Bedienteil ein berührsensitives Bedienfeld ist. Dieses berührsensitive Bedienfeld kann in dem elektronischen Anzeigefeld angeordnet sein. In einer alternativen Ausgestaltung kann es jedoch auch außerhalb der Ausmaße dieses elektronischen Anzeigefelds ausgebildet sein.

Vorzugsweise werden anzuzeigende Inhalte in quasi digitaler Form auf dem elektronischen Anzeigefeld um ein insbesondere zentral im Anzeigefeld angeordnetes und relativ zum Anzeigefeld im Hinblick auf die Betriebsbedingungseinstellung des Hausgeräts bewegbaren Bedienelements herum als Displayinhalt angezeigt. Insbesondere werden beim Drehen des Bedienelements die angezeigten Werte und/oder Informationen im Hinblick auf die Anwahl signalisierend gekennzeichnet. Insbesondere durch Bestätigen oder eine vorgebbare Wartezeit nach dem Anwählen oder dem Wechseln in eine andere Funktion wird der eingestellte Wert übernommen.

Durch das zumindest eine weitere Bedienteil können diesem kontextbezogene, benötigte Funktionen oder Inhalte zugeordnet werden und dadurch die erforderliche Anzahl an zusätzlichen Bedienteilen so gering wie möglich gehalten werden.

Wesentliche Vorteile der Bedienvorrichtung liegen darin, dass durch die Kombination aus quasi einem manuell bewegbaren Bedienelement und einer elektronischen Anzeigeeinheit komplexe Menütiefen in sehr einfacher und übersichtlicher Form dargestellt werden können und durch die positionelle Anordnung der genannten beiden Komponenten eine sehr nutzerfreundliche Bedienbarkeit und sehr zuverlässige und sichere Wahrnehmbarkeit der Informationen erreicht werden können. Die sehr kompakte Ausgestaltung der Bedienvorrichtung ist dabei nicht zu vergessen.

Die Umfeldanzeige bietet durch die zeitgleiche Anzeige von vielen Einstellwerten den größtmöglichen Überblick bei der Einstellung von Parameterwerten im Bezug auf die nutzbare Displayhöhe und ist somit einer Listendarstellung im herkömmlichen Sinne überlegen.

Die kontextbezogene Darstellung von Optionen erlaubt es, nur die jeweils notwendigen Wahlmöglichkeiten anzuzeigen und somit die visuelle Komplexität der Benutzerschnittstelle gering zu halten. Das gleiche gilt auch für die klare Trennung in Funktionsmenüinhalte und Optionsmenüinhalte, welche den jeweiligen Fokus auf Standardoperationen oder nachgelagerte Zusatzoptionen lenkt.

Des Weiteren betrifft die Erfindung auch ein Hausgerät mit einer Bedienvorrichtung oder einer vorteilhaften Ausgestaltung davon. Das Hausgerät ist insbesondere zum Zubereiten von Lebensmitteln ausgebildet und kann beispielsweise ein Kochfeld oder ein Backofen sein.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die nur in den Figuren alleine gezeigten Merkmale und Merkmalskombinationen und/oder die nur in der Figurenbeschreibung genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Hausgeräts;
- Fig. 2: eine Frontansicht eines ersten Ausführungsbeispiels einer Bedienvorrichtung;
- Fig. 3: eine Frontansicht eines zweiten Ausführungsbeispiels einer erfindungsgemäßen Bedienvorrichtung;
- Fig. 4: eine Frontansicht eines dritten Ausführungsbeispiels einer erfindungsgemäßen Bedienvorrichtung und
- Fig. 5: eine Frontansicht eines vierten Ausführungsbeispiels einer erfindungsgemäßen Bedienvorrichtung.

In den Figuren werden gleiche oder funktionsgleiche Elemente mit den gleichen Bezugszeichen versehen.

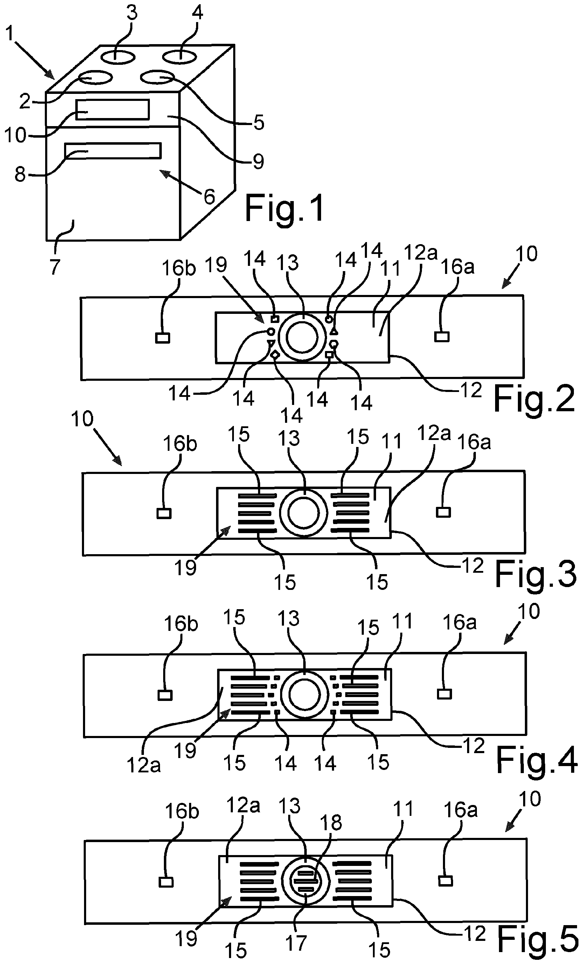

In Fig. 1 ist in vereinfachter schematischer Darstellung ein als Backofen 1 ausgebildetes Hausgerät dargestellt. Der Backofen 1 umfasst vier Kochzonen 2, 3, 4 und 5 und einen Garraum 6, der durch eine Tür 7, die an der Außenseite einen Griff 8 aufweist, verschließbar ist. Im Ausführungsbeispiel oberhalb der Tür 7 angeordnet ist eine Bedienblende 9 mit einer Bedienvorrichtung 10. Sowohl die Position als auch die Ausgestaltung der Bedienblende 9 ist lediglich beispielhaft.

In Fig. 2 ist in vereinfachter Darstellung eine Frontansicht eines Ausführungsbeispiels der Bedienvorrichtung 10 gezeigt. Die Bedienvorrichtung 10 umfasst ein elektronisches Anzeigefeld 11, welches als Display ausgebildet ist. Auf dem Anzeigefeld 11, welches flächenmäßig durch den Rand bzw. die Begrenzung 12 begrenzt ist, die im Ausführungsbeispiel rechteckig ausgestaltet ist, können Informationen dynamisch veränderbar angezeigt werden. Auf einem derartigen Bildschirm können unterschiedliche Informationen in Form von Buchstaben und/oder Zahlen und/oder Symbolen angezeigt werden.

Die Bedienvorrichtung 10 umfasst darüber hinaus ein Bedienelement 13, welches im Ausführungsbeispiel ein Drehwähler ist. Wie aus der Darstellung in Fig. 2 zu erkennen ist, ist der Drehwähler 13 mit seinen von vorne betrachteten in die Figurenebene projizierten Flächenausmaßen vollständig innerhalb der Fläche 12a mit der Begrenzung 12 des elektronischen Anzeigefelds 11 angeordnet. Er ist somit quasi in die flächigen Ausmaße des Anzeigefelds 11 vollständig eingebettet positioniert. Das Bedienelement 13 ist aufgrund seiner Ausgestaltung als Drehwähler relativ zum Anzeigefeld 11 bewegbar. Durch Drehen des Bedienelements 13 werden die damit verbundenen Betriebsbedingungen des Backofens 1 eingestellt. Wie zu erkennen ist, ist benachbart und zumindest in Ringabschnitten um das ringförmige Bedienelement 13 herum eine Informationsdarstellung ausgebildet, die in Fig. 2 in Form von Symbolen 14 erfolgt. Die Symbole 14 sind in ihrer Anzahl lediglich beispielhaft angegeben. Es kann auch vorgesehen sein, dass anstatt der Symbole 14 Zahlen und/oder Buchstaben angezeigt sind. Die Informationen um das ringförmige Bedienelement 13 herum stellen in alternativer Ausführung beispielsweise auch Menüoberflächen 19 (Figuren 3 bis 5) dar, die dann eine gewisse Ordnerstruktur definieren. Die dann angezeigten Informationen können beispielsweise einen Begriff für einen Ordner, in dem dann weitere Informationen enthalten sind, darstellen. Wird dann ein derartiger Ordner durch Anwählen in Gestaltung des Drehens des Bedienelements 13 ausgewählt, kann der Menüinhalt weiter detaillierter angezeigt werden.

Wie im Ausführungsbeispiel gemäß Fig. 2 zu erkennen ist, sind außerhalb der Fläche mit der Begrenzung 12 des Anzeigefelds 11 zwei Bedienteile 16a und 16b ausgebildet. Diese Bedienteile 16a und 16b sind im Ausführungsbeispiel als berührsensitive Bedienfelder ausgebildet. Sie können einerseits beispielsweise ein Ein- und Ausschalten des Backofens 1 funktionell umfassen. Zusätzlich oder anstatt dazu kann auch vorgesehen sein, dass zumindest eines der Bedienteile 16a oder 16b zur Einstellung einer Informationstiefe eines auf dem Anzeigefeld 11 anzuzeigenden Menüinhalts ausgebildet ist. Dies bedeutet, dass die Informationen, wie sie in Fig. 2 als Symbole 14 oder als Menüoberbegriffe einer Menüoberfläche 19 dargestellt sind, durch eines der Bedienteile 16a oder 16b veränderbar sind. Gegebenenfalls kann damit eingestellt werden, dass ein anzuzeigender Begriff für einen Ordner nicht der übergeordnete Gesamtordner ist, sondern bereits eine tiefere Ordnerstruktur darstellt und beispielsweise als Grundeinstellung ein Unterordner angezeigt ist.

Es kann auch vorgesehen sein, dass das Bedienteil 16a und/oder 16b innerhalb der Fläche mit der Begrenzung 12 des Anzeigefelds 11 angeordnet ist.

In Fig. 3 ist in einfacher schematischer Darstellung eine Frontansicht der Bedienvorrichtung 10 gemäß einem weiteren Ausführungsbeispiel gezeigt. Im Unterschied zur Ausgestaltung in Fig. 2 ist hier vorgesehen, dass um das ringförmige Bedienelement 13 herum als Informationen Wörter oder Texte 15 angezeigt sind. Diese können beispielsweise Schlagwörter oder auch Kurzsätze sein.

In Fig. 4 ist in weiterer schematischer Darstellung eine Frontansicht eines weiteren Ausführungsbeispiels einer Bedienvorrichtung 10 gezeigt. Bei dieser Ausgestaltung ist die Informationsdarstellung um das Bedienelement 13 herum jeweils eine Kombination eines Symbols 14 mit einer Wortinformation oder Textinformation 15.

In Fig. 5 ist ein weiteres Ausführungsbeispiel einer Frontansicht einer Bedienvorrichtung 10 gezeigt. Bei dieser Ausgestaltung ist vorgesehen, dass ein von dem Ring des Bedienelements 13 umschlossener kreisförmiger Flächenbereich 17 als weiterer Feldbereich zur Anzeige von Informationen und/oder als berührsensitives Bedienfeld ausgebildet ist. So kann vorgesehen sein, dass auf diesem elektronischen Feldbereich zur Anzeige Zahlen und/oder Buchstaben und/oder Symbole als Informationen 18 darstellbar sind.

Bei allen Ausführungen kann vorgesehen sein, dass das spezifische von der Drehstellung des Bedienelements 13 abhängige Symbol 14 und/oder die Worte bzw. Texte 15 als aktiviert kenntlich gemacht wird. Dies kann beispielsweise durch Aufleuchten oder Aufleuchten in einer Lichtfarbe unterschiedlich zu den nicht aktivierten Symbolen 14 und/oder Wörtern 15 erfolgen. Zusätzlich oder anstatt dazu kann auch vorgesehen sein, dass ein Symbol 14 und/oder ein Wort 15 abhängig von der Auswahl durch die Drehstellung des Bedienelements 13 in der Schriftgröße und/oder Zahlengröße und/oder Symbolgröße als ausgewählt und aktiviert kenntlich gemacht ist.

### Bezugszeichenliste

- 1: Backofen
- 2, 3, 4, 5: Kochzonen
- 6: Garraum
- 7: Tür
- 8: Griff
- 9: Bedienblende
- 10: Bedienvorrichtung
- 11: Anzeigefeld
- 12: Begrenzung
- 12a: Fläche
- 13: Bedienelement
- 14: Symbole
- 15: Wort/Text
- 16a, 16b: Bedienteile
- 17: Flächenbereich
- 18: Information
- 19: Menüoberfläche

## Patentansprüche

1. Bedienvorrichtung (10) für ein Hausgerät (1), mit einem elektronischen Anzeigefeld (11) und einem als Drehwähler ausgebildeten Bedienelement (13), welches zur Einstellung von Betriebsbedingungen des Hausgeräts (1) relativ zum Anzeigefeld (11) bewegbar ist, wobei das Bedienelement (13) zumindest bereichsweise innerhalb der Fläche (12a) des Anzeigefelds (11) angeordnet ist, und das Bedienelement als Ring ausgebildet ist **dadurch gekennzeichnet, dass** eine Vorderseite des Bedienelements (13) zumindest bereichsweise als elektronischer Anzeige-Feldbereich zur Anzeige von Informationen ausgebildet ist.

2. Bedienvorrichtung (10) nach Anspruch 1, **dadurch gekennzeichnet, dass** an zumindest einem Feldbereich des Anzeigefelds (11) die anzuzeigende Information (14, 15) abhängig von der Betätigung, insbesondere der Bewegung, des Bedienelements (13) veränderbar ist.

3. Bedienvorrichtung (10) nach einem der vorhergehenden Ansprüche, **dadurch gekennzeichnet, dass** eine anzuzeigende Menüoberfläche (19) auf dem Anzeigefeld (11) um das Bedienelement (13) herum anzeigbar ist.

4. Bedienvorrichtung (10) nach Anspruch 3, **dadurch gekennzeichnet, dass** die Menüoberfläche (19) dynamisch veränderbar ist.

5. Bedienvorrichtung (10) nach Anspruch 3 oder 4, **dadurch gekennzeichnet, dass** Menüinhalte (14, 15) abhängig von der Stellung, insbesondere Drehstellung, des Bedienelements (13) aktivierbar sind.

6. Bedienvorrichtung (10) nach Anspruch 5, **dadurch gekennzeichnet, dass** das Aktivieren ein Aufleuchten, insbesondere in einer anderen Lichtfarbe als nicht aktivierte Menüinhalte (14, 15), und/oder eine Änderung der Schriftgröße und/oder Zahlengröße und/oder Symbolgröße umfasst.

7. Bedienvorrichtung (10) nach einem der vorhergehenden Ansprüche, **dadurch gekennzeichnet, dass** ein von dem Bedienelement (13) umschlossener Flächenbereich (17) ein berührsensitives Bedienfeld aufweist, mit welchem durch Berühren Betriebsbedingungen des Hausgeräts (1) einstellbar sind.

8. Bedienvorrichtung (10) nach einem der vorhergehenden Ansprüche, **dadurch gekennzeichnet, dass** mittels dem Bedienelement (13) oder einem weiteren Bedienteil (16a, 16b) die Informationstiefe eines auf dem Anzeigefeld (11) anzuzeigenden Menüinhalts einstellbar ist.

9. Bedienvorrichtung (10) nach einem der vorhergehenden Ansprüche, **dadurch gekennzeichnet, dass** separat zum Bedienelement (13) zumindest ein Bedienteil (16a, 16b) vorgesehen ist, welches das Ein- und Ausschalten des Hausgeräts (1) und/oder das Unterbrechen eines ablaufenden Programms des Hausgeräts (1) ermöglicht.

10. Bedienvorrichtung (10) nach Anspruch 9, **dadurch gekennzeichnet, dass** das Bedienteil (16a, 16b) ein berührsensitives Bedienfeld ist.

11. Bedienvorrichtung (10) nach Anspruch 10, **dadurch gekennzeichnet, dass** das berührsensitive Bedienteil (16a, 16b) in dem Anzeigefeld (11) angeordnet ist.

12. Bedienvorrichtung (10) nach Anspruch 10, **dadurch gekennzeichnet, dass** das berührsensitive Bedienteil (16a, 16b) außerhalb des Anzeigefelds (11) angeordnet ist.

13. Hausgerät (1) mit einer Bedienvorrichtung (10) nach einem der vorhergehenden Ansprüche.

## Claims

1. Operating device (10) for a household appliance (1), having an electronic display panel (11) and an operating element (13) embodied as a rotary selector switch, that can be displaced relative to the display panel (11) for setting operating conditions of the household appliance (1), wherein the operating element (13) is disposed, at least in some regions, within the area (12a) of the display panel (11), and the operating element is embodied as a ring, **characterised in that** a front face of the operating element (13) is embodied, at least in some regions, as an electronic display panel for displaying information.

2. Operating device (10) according to claim 1, **characterised in that** on at least one area of the display panel (11) the information (14, 15) to be displayed can be changed as a function of the activation, in particular the movement, of the operating element (13).

3. Operating device (10) according to one of the preceding claims, **characterised in that** a menu interface (19) to be displayed can be displayed on the display panel (11) around the operating element (13).

4. Operating device (10) according to claim 3, **characterised in that** the menu interface (19) is dynamically changeable.

5. Operating device (10) according to claim 3 or 4, **characterised in that** menu contents (14, 15) can be activated as a function of the position, in particular the rotary position, of the operating element (13).

6. Operating device (10) according to claim 5, **characterised in that** the activation includes illumination, in particular in a luminous colour which differs from that of non-activated menu contents (14, 15), and/or a change in the font size and/or number size and/or symbol size.

7. Operating device (10) according to one of the preceding claims, **characterised in that** an area (17) enclosed by the operating element (13) has a touch-sensitive operating panel with which operating conditions of the household appliance (1) can be set by touch.

8. Operating device (10) according to one of the preceding claims, **characterised in that** the information depth of a menu content to be displayed on the display panel (11) can be set by means of the operating element (13) or a further operating unit (16a, 16b).

9. Operating device (10) according to one of the preceding claims, **characterised in that** at least one operating unit (16a, 16b), which enables the household appliance (1) to be switched on and off and/or a current program of the household appliance (1) to be interrupted, is provided separately from the operating element (13).

10. Operating device (10) according to claim 9, **characterised in that** the operating unit (16a, 16b) is a touch-sensitive operating panel.

11. Operating device (10) according to claim 10, **characterised in that** the touch-sensitive operating unit (16a, 16b) is disposed in the display panel (11).

12. Operating device (10) according to claim 10, **characterised in that** the touch-sensitive operating unit (16a, 16b) is disposed outside the display panel (11).

13. Household appliance (1) having an operating device (10) according to one of the preceding claims.

## Revendications

1. Dispositif de commande (10) pour un appareil ménager (1), comprenant un champ d'affichage (11) électronique et un élément de commande (13) réalisé comme sélecteur rotatif, lequel est déplaçable par rapport au champ d'affichage (11) pour le réglage de conditions de fonctionnement de l'appareil ménager (1), l'élément de commande (13) étant disposé, au moins par sections, à l'intérieur de la surface (12a) du champ d'affichage (11), et l'élément de commande étant réalisé comme anneau, **caractérisé en ce qu'**un côté avant de l'élément de commande (13) est réalisé, au moins en partie, comme zone de champ d'affichage électronique pour l'affichage d'informations.

2. Dispositif de commande (10) selon la revendication 1, **caractérisé en ce que** sur au moins une zone de champ du champ d'affichage (11), l'information à afficher (14, 15) est modifiable en fonction de l'actionnement, notamment du mouvement, de l'élément de commande (13).

3. Dispositif de commande (10) selon l'une quelconque des revendications précédentes, **caractérisé en ce qu'**une surface de menus (19) à afficher est affichable sur le champ d'affichage (11) autour de l'élément de commande (13).

4. Dispositif de commande (10) selon la revendication 3, **caractérisé en ce que** la surface de menus (19) est modifiable dynamiquement.

5. Dispositif de commande (10) selon la revendication 3 ou 4 **caractérisé en ce que** des contenus de menus (14, 15) sont activables en fonction de la position, notamment de la position de rotation, de l'élément de commande (13).

6. Dispositif de commande (10) selon la revendication 5, **caractérisé en ce que** l'activation comprend une illumination, notamment dans une autre couleur de lumière que les contenus de menus (14, 15) non activés, et/ou une modification de la taille des caractères et/ou de la taille des chiffres et/ou de la taille des symboles.

7. Dispositif de commande (10) selon l'une quelconque des revendications précédentes, **caractérisé en ce qu'**une zone (17) de la surface, entourée par l'élément de commande (13), présente un champ de commande tactile à l'aide duquel des conditions de fonctionnement de l'appareil ménager (1) sont réglables par contact.

8. Dispositif de commande (10) selon l'une quelconque des revendications précédentes, **caractérisé en ce qu'**au moyen de l'élément de commande (13) ou d'une pièce de commande (16a, 16b) supplémentaire, la profondeur d'information d'un contenu de menu à afficher sur le champ d'affichage (11) est réglable.

9. Dispositif de commande (10) selon l'une quelconque des revendications précédentes, **caractérisé en ce qu'**au moins une pièce de commande (16a, 16b) est ménagée séparément de l'élément de commande (13), laquelle permet la mise en fonction et hors fonction de l'appareil ménager (1) et/ou l'interruption d'un programme en cours de déroulement de l'appareil ménager (1).

10. Dispositif de commande (10) selon la revendication 9, **caractérisé en ce que** la pièce de commande (16a, 16b) est un champ de commande tactile.

11. Dispositif de commande (10) selon la revendication 10, **caractérisé en ce que** le champ de commande tactile (16a, 16b) est disposé dans le champ d'affichage (11).

12. Dispositif de commande (10) selon la revendication 10, **caractérisé en ce que** le champ de commande tactile (16a, 16b) est disposé en dehors du champ d'affichage (11).

13. Appareil ménager (1) comprenant un dispositif de commande (10) selon l'une quelconque des revendications précédentes.
